# EUROPEAN PATENT APPLICATION

(11) **EP 2 584 417 A2**
(43) Date of publication of application: **24.04.2013**
(21) Application number: 12189091.7
(22) Date of filing: 18.10.2012
(51) Int. Cl.: G05B 19/042

(54) **Improved storage method**

(30) Priority: 18.10.2011 GB 201118005; 02.11.2011 GB 201118972
(71) Applicant: Control Techniques Ltd, Newtown, Powys SY16 3BE (GB)
(72) Inventor: König, Holger Jürgen, 53783 Eitorf (DE)
(74) Representative: Smith, Jeremy Robert

(57) **Abstract**

An operating system for a mechanical load (e.g. an elevator) is driven by an electric motor drive through a drive mechanism. The electric motor drive includes an encoder loaded with data that profiles the operating system as a whole. The connection of the motor drive to the operating system enables the download from the encoder of the operating parameters for operating the load.

## Description

The invention relates to an improved storage method and associated storage means for storing operating data for a drive system. It also relates to an improved set-up method for a drive system using said improved storage method and means.

### Background

Drive systems are well known. In general a drive system includes a motor, a load that is moved or otherwise driven by the motor, and a controller or "drive unit" which controls operation of the motor. This control can include controlling the starting and stopping times of the motor and controlling the supply of electricity to the motor. The manner in which a motor is controlled will depend on a range of factors such as the physical capability of the motor, the nature of the load which must be driven, the desired movement of that load and other aspects of the technology of the drive system as a whole, such as gear ratio if a geared motor is to be used.

A lift system is a known type of drive system. Lift systems (also known as elevator systems) are generally pulley-based systems wherein a rope, belt or cable is fitted over two or more pulleys or "sheaves" and rotational movement of the sheaves causes movement of the cable. The load in a lift system generally comprises a lift cabin and a possibly also a counterweight. A motor is used to drive rotational movement of the sheaves. The motor may be an electric motor. It may be synchronous or asynchronous. It may be geared or gearless. Many motors include a position detector and/or a speed detector for feedback of the position and/or speed of the motor to a controller such as a drive unit.

When a motor is fitted into a drive system, information about that motor must be supplied to the controller in order for it to control operation of the motor safely and accurately. An encoder can be provided with a motor in order to supply this information. Many known encoders include an electronic storage means which stores setup data and operating information for the motor. This storage means is generally referred to as an "electronic nameplate". For example, information such as the nominal power and speed of a motor can be stored in the electronic nameplate. Other performance data such as speed loop gain and speed loop filter time can also be stored. When a motor which has an electronic nameplate is connected into a drive system, the drive system controller can usually read the information on the nameplate either automatically or upon instruction from the user. Thereafter, it can use that information in determining how to control operation of the motor over time.

As mentioned above, the controller in a drive system also needs information about the load and other aspects of the drive system. Conventionally, that information is supplied to the controller after all the components of the drive system have been connected together. A single motor is capable of driving a range of different loads. Therefore motor information alone is not enough for the controller. Often, the other operating information describing a drive system has to be supplied to the controller manually. Additionally or alternatively, a drive system may conventionally have to temporarily operate in a "learning mode" wherein the controller receives feedback information from actual operation of the drive system and calibrates its control of the motor accordingly. Furthermore, when the motor within a conventional drive system is changed or replaced, the drive system operating information will have to be re-supplied to, or re-learnt by, the controller.

The supply of drive system operating information to the controller, either by direct input or learning, is time consuming. It is therefore inefficient and inconvenient for the end user. There is no known solution for supplying drive system operating information to the controller in an accurate and efficient manner.

An invention is set out in the claims.

### Figures

Embodiments and examples will now be described with reference to the figures of which:
Figure 1 is a schematic representation of a lift system;
Figure 2 shows a 3-stage system set up process;
Figure 3 shows the structure of a data file for storage on an encoder; and
Figure 4 shows the structure of a parameter object as shown in Figure 3.

### Overview

In overview, an improved storage method is provided for storing operating information for a drive system, wherein the technology for that drive system is known before the drive system is set up. For example, the motor may be a gearless motor for a lift system wherein the motor shaft is fitted with a sheave mounted for a definite load or a geared motor for which the gear ratio is known.

The improved storage method makes use of electronic storage means such as an electronic nameplate. It stores operating information about the motor itself and also operating information about the other component parts of the drive system, such as the load and any gears, on the electronic nameplate. The electronic nameplate is then supplied integral to, or in conjunction with, the motor. For example, it can be comprised within an electronic chip which is built into the motor. Additionally or alternatively, the electronic nameplate can be comprised within an encoder which is mounted on or integral with the rotating shaft of the motor.

The information stored on the electronic nameplate can be supplied to the drive system controller automatically or upon user instruction. For example, when a motor which has an associated electronic nameplate is connected into a driving system, the controller may automatically read the information stored on the electronic nameplate. Once said information has been supplied to the controller, the controller can then control and optimise operation of the drive system without requiring any additional information or calibration.

The operation information can be stored as a data file including one or more file header objects and associated parameter objects. The file header objects can include identifiers for enabling a controller within a drive system to identify what parameters are stored in a file and to extract those parameters if there are needed for a particular application or set up. The parameter objects comprise parameter headers and parameter values. The parameter headers can give detailed information about the parameters including their function. Again, this enables the controller to identify whether a parameter is needed at a particular time. It therefore allows the storage of parameters that will not be needed for every application, but in a clear and transparent way that allows the controller to identify and use the necessary parameters for controlling operation of a drive system and to ignore those that are not needed.

If the operating information for the motor or any other aspect of the drive system needs to be updated at any time, the information stored on the motor's electronic nameplate can be updated. That updated information can then be supplied from the electronic nameplate to the controller. There is no need for the user to also manually update the controller, or for the controller to operate in learning mode, after an aspect of the drive system has been changed.

Updating the operating information may include adding new parameter objects into the data file which supplies the operating information to the encoder. Additionally or alternatively, updating the operating information may comprise changing parameter values and/or changing parameter header information, for example if the function of a particular parameter has changed due to a change in the technology set up for the drive system.

The improved storage method and means therefore enhances the speed and ease with which a user can set up a drive system, and removes the need for manual information input or calibration after a motor has been connected into the drive system. It also enables operating information for the drive system to be managed and updated more efficiently.

### Detailed Description

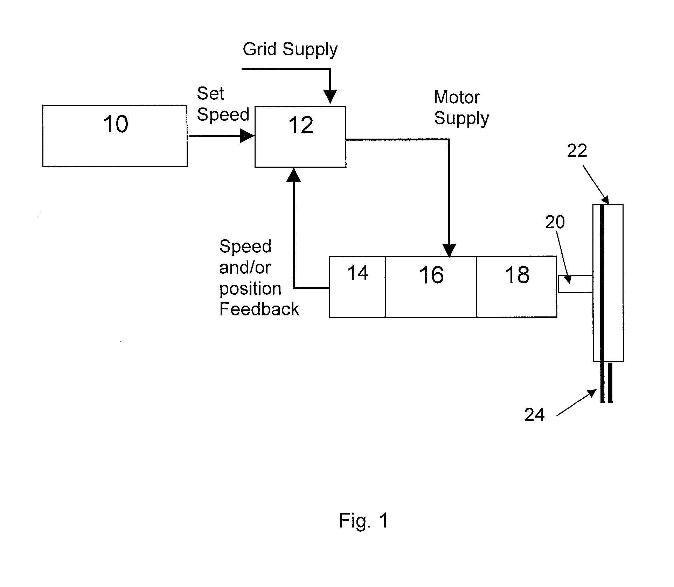

Figure 1 shows a lift system including a geared motor. The lift system comprises a lift controller 10, a drive unit 12, a feedback device 14, a motor 16, a gear (or set of gears) 18, a rotatable motor shaft 20 extending from the motor 16, via the gear 18, and a traction sheave 22 mounted to the motor shaft 20. Ropes 24 run over the traction sheave 22. A weight such as a lift cabin (not shown) can be connected to the ropes 24 in order to be moved by the lift system.

The gear 18 is provided mounted on the motor shaft 20, between the motor 16 and the traction sheave 22. Therefore the gear 18 can be used to amend the speed of rotation of the motor shaft 20 for a particular torque applied to the motor 16. The motor shaft 20 will rotate with the rotor inside the motor 16, at a speed determined by the gear 18. The motor shaft 20 can therefore drive rotation of the traction sheave 22, to cause the ropes 24 to move therearound. The ropes 24 can therefore lift a load such as a lift cabin and, if used, a counterweight.

The feedback device 14 in figure 1 comprises an encoder. As will be known to the skilled reader, an encoder is a feedback device which can monitor the relative positions of the rotor and stator within a motor 16 and can feed that information back to a controller, such as the drive unit 12 shown in figure 1. It may also be a speed feedback device. The encoder 14 is provided mounted on an end the motor shaft 20, distal to the gear 18. It rotates with the rotor during operation of the motor 16. The encoder 14 comprises a memory which stores an electronic nameplate. The memory may be provided within an electronic chip. The memory should preferably be non-volatile memory, for example flash memory or ROM.

The encoder 14 can provide feedback to the drive unit 12 in order for it to control operation of the lift system by controlling the supply of current to the motor 10. The drive unit 12 is supplied with electricity from a grid supply and can use the speed and position information from the encoder 14 to control the current supply to the stator windings in order to maximise torque on the rotor.

The drive unit 12 may itself contain a control means and/or it can be controlled by an external controller such as the lift controller 10 in figure 1. The lift controller 10 can control aspects of the operation of the system such as the set speed.

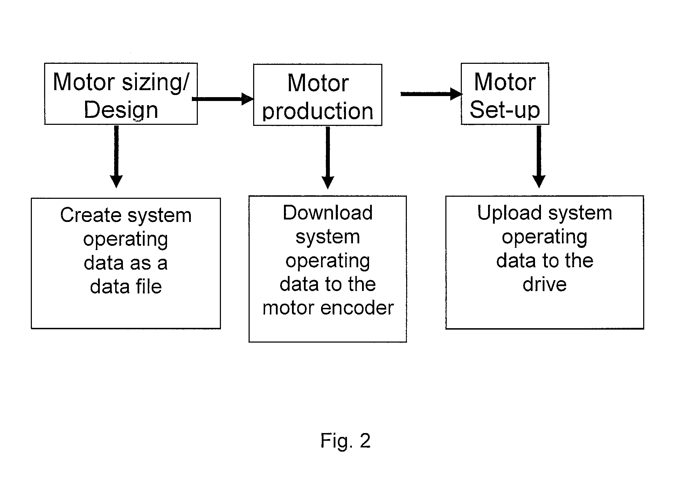

Lift systems such as the one shown in Figure 1 are carefully designed before being implemented in practice for a particular load. As shown in Figure 2 herein, this process includes sizing and design of the motor itself before motor production. But the process also involves designing and determining operating parameters of the other component parts of the system that will work in conjunction with the motor. Therefore it has been recognized herein that it is possible to know the operating information for the whole lift system during design (or at least during manufacture or assembly) of the motor 16, before it is supplied to the end user.

Once the configuration of the motor 16 has been established (by the designer, manufacturer or supplier), for a known gear ratio and for the traction sheave 22 being mounted on the motor shaft 20 for a definite load, the profile of operating information for the lift system can be determined. This profile can be determined using any suitable method. For example, look-up charts, simulations or actual tests on the configured motor may be used. Once the profile of operating information has been determined, it can be downloaded to the encoder 14 as part of the motor production process, as shown in the second stage in figure 2 herein.

The operating information can be stored in the encoder 14 as an electronic nameplate for the motor 16 but in the context of lift system as a whole. Therefore the electronic nameplate within the encoder can include the complete set (or "profile") of operating information necessary for controlling the lift system. This includes motor 16 operating information plus additional information on the gear 18, sheave 22 and load, and parameters such as the speed loop gains for the lift system.

The operating information is stored in the encoder 14 in any appropriate manner. It may be comprised within a single memory bank or within a plurality of memory banks. The information can be organised so that parameters relating to the same component or function of the drive system are stored together, for enhanced efficiency. The parameters may be stored as bit parameters and/or as word parameters.

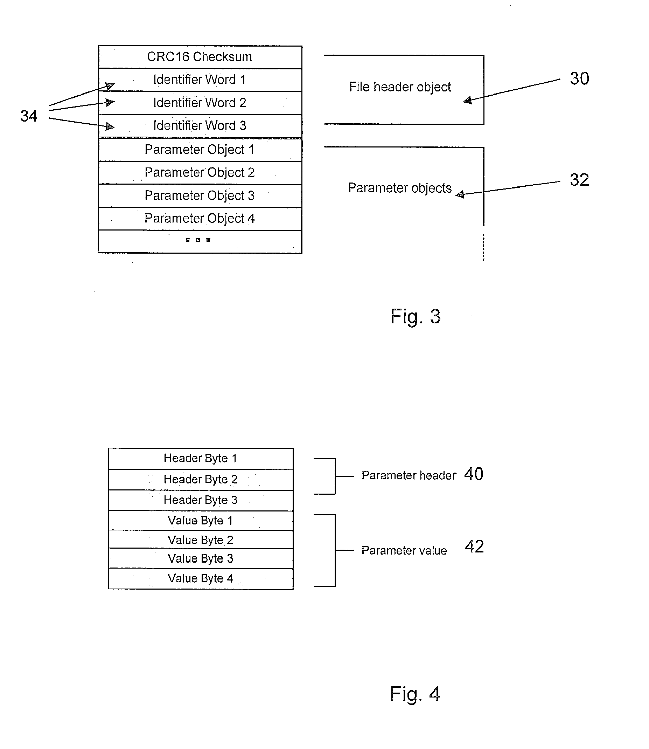

According to an embodiment, all the operating information necessary for the controller to control the drive unit 12, and hence operate the lift system, can be stored in the encoder 14 as a data file. The file contains at least one file header object and several parameter objects for each file header object, as shown in Figures 3 and 4 herein.

The file header object 30 defines the interpretation of its component parameter objects 32. Each file header object 30 comprises a number of identifier words 34 to describe the component parameter objects 32. The concept of identifier words will be known to the skilled person. There are used to denote parameter type, variables, or functions which require the parameters. By containing identifier words 34, the file header object 30 allows for different parameter structures and content to be incorporated therein, dependent on the particular application or technology for the drive system that the motor is to be incorporated in.

The file header object 30 also contains a checksum 36 such as a CRC 16 checksum. As the skilled reader will be aware, a checksum is a fixed size datum created from arbitrary digital data which enables detection of accidental errors that could be introduced during transmission or storage of a file. Therefore, once the file has been incorporated into the encoder, a checksum function or checksum algorithm can be run to ensure that the checksum file is correct. If it is, this is an indicator that the parameter information within the file is also correct and not corrupted. Therefore the checksum 36 ensures data consistency and security.

As mentioned above, the data file comprises a plurality of parameter objects 32. For example the parameter may comprise motor data such as nominal current, voltage or speed. Other parameters may comprise performance data such as control loop gains and filter times. For a lift system the parameters may also include lift data such as information about roping, sheave diameter and lift speeds. Each individual parameter object 32 comprises a parameter header 40 and a parameter value 42. The parameter header 40 defines the function of the parameter. The parameter header 40 can also defines other features such as the word length (1,8,16 to 32 Bit). This allows packing of data to save encoder memory space.

If the encoder 14 knows the word length of a parameter from its parameter value 42, it can ensure that the parameter only occupies the number of bytes within the encoder memory which are needed to accommodate it. The next parameter could be stored immediately thereafter, thereby enabling parameters to be stored compactly without any loss of accuracy.

By defining the function of the parameter in the parameter header 40, the data file allows different parameters to be stored, for example for different respective technology setups or applications, without changing how the system controller or drive must read and interpret the data file. Therefore the same structure of data file with all the operating information for a system can be stored in an encoder and used successfully by the controller for controlling operation of that drive system, regardless of the particulars of the system set up. The integration of a function into the parameter header 40 also allows storage of a range of parameters even if the controller will not need or use each of those parameters for every application of the drive system. The controller can read the parameter header 40, find out its function, and therefore either use the parameter or not dependent on the particular application of any instant in time. In addition, the integration of the function into the parameter header 40 allows for adding of parameters into a data file when it is updated.

An example of a data file for storage in an encoder as described herein can be seen in Appendix 1.

When the end user connects the motor 16 into the lift system, the profile of operating information stored on the electronic nameplate will be communicated to the drive unit 12. This in turn can be communicated to the lift controller 10, if appropriate. The drive unit 12 will usually read the electronic nameplate automatically upon connection of the motor 16, but it is possible for this communication to be user-initiated instead. The drive unit 12 and/or the lift controller 10 will use the information from the electronic nameplate in order to tailor control of the motor to meet the operational characteristics and requirements of the entire lift system.

For example, the drive unit 12 can initiate control of its current supply to the motor 16 based solely on the operating information from the electronic nameplate and maintain that control over time based on the position and speed feedback from the encoder 14. The drive unit 12 doesn't need to also read operating information directly from the gear 18, sheave 22 or load, or any manual information input from the user. Nor is there any need to input operating information directly into the drive unit 12 itself or into the lift controller 10. Instead, all the information needed for control of the lift system is received directly from the encoder 14.

Similarly, if any aspect of the technology for the lift system is changed - for example if the make or model of motor 16 is changed, if the number of magnetic poles on the motor 16 changes of if the mounting of the sheave 22 is altered in preparation for use with a different predetermined load - the profile can be appropriately updated at an external processor (such as a general purpose computer) and that updated profile can be downloaded directly to the encoder 14. The downloaded updated profile can replace a pre-existing stored profile on the encoder 14 and the update will be communicated to the drive unit 12 without actually updating anything at the drive unit 12 itself or at the lift controller 10.

According to another embodiment, a lift system includes a gearless motor. Again, the lift system includes an encoder mounted to or integral with the motor, a motor shaft and a sheave with ropes connected thereto. The lift system also includes control means such as a drive unit which includes or is connected to a lift controller.

Because, in this embodiment, no gears are to be used, the sheave can be mounted directly onto the shaft of the motor for a definite load. There is therefore no need to know gear ratio for the system. As a result, the profile of operating information which will be determined and downloaded to the encoder will differ slightly from the profile that is determined in the first embodiment described above. In each embodiment, the designer (or manufacturer) of the motor will know which operating parameters need to be established for the system, in order for it to be controlled accurately. Regardless of the particulars of the operating information which is required for a particular lift system (or other drive system), all that operating information can be stored in the encoder, associated with the motor. It has been recognized herein that there is no need to duplicate that information elsewhere in the system, or to divide it between different locations within the system.

Therefore the improved storage method and means make setting up a drive system much easier and more efficient for the end user. It also makes data management for the system much easier, since all operating information is stored in one place. Therefore, if the drive system is updated, it is not necessary to update information stored in the drive unit or other controller itself. Instead, updating the information stored on the motor encoder is sufficient to ensure the controller uses up-to-date information when controlling operation of the drive system.

Whilst particular embodiments for a lift system have been described in detail herein, it will be appreciated that the improved storage method and means can also be used for other drive systems. Once the operating information for the drive system has been determined, it can all be stored in one place and provided in conjunction with the motor. Therefore the user will only have to concern themselves with reading, using and (if necessary) updating operation information at one location. This is a straight-forward and convenient approach for the user and it is also more reliable in terms of data accuracy, because there is no risk of the information used by a system controller being out of synch with information stored in the motor encoder. The risk of the user failing or forgetting to update the information for the system is also reduced, because it is all stored in one place.

The profile of operating information for a drive system has been referred to herein as an "electronic nameplate" however it will be appreciated that it can be stored in any suitable form and given any appropriate title. The information may be stored on an encoder or on any other suitable device that is provided as part of or in conjunction with the motor. The device should be able to transmit the stored information to a drive unit or other controller for a drive system. Using an encoder is particularly useful since it is already set up to provide feedback to a drive unit within a drive system.

Whilst a particular structure of data file has been described herein, it will appreciated that any suitable data file structure may be used. The electronic nameplate may comprise a single file or may comprise a plurality of files. One or more parameters may be represented per file. The parameters may be stored in a structure that enables the file to be used readily by a wide range of different controllers. Alternatively, a specific file structure may be adopted for use in conjunction with a specific type of controller or drive system. Any suitable code or computer language may be employed in the data file.

Any processor, such as a general-purpose computer, can be used to determine, store and download the electronic nameplate to the encoder. The download may be via any appropriate communication path, including wired or wireless connection. The processor may store operating information for a drive system after it has been downloaded to the encoder. The encoder itself may also comprise, or be connected to, back up memory.

The controller or drive unit which reads and uses the information from the electronic nameplate can be of any appropriate type. The electronic nameplate can be stored on memory of any suitable format including solid-state, magnetic or optical storage or as a signal that can be communicated wirelessly or down a communication wire.

Although a motor has been referred to herein, the electronic nameplate can be used with other types of electric machine for use within a drive system.

Embodiments have been described above by way of example only. It will be appreciated that variations may be made which are still within the scope of the invention.

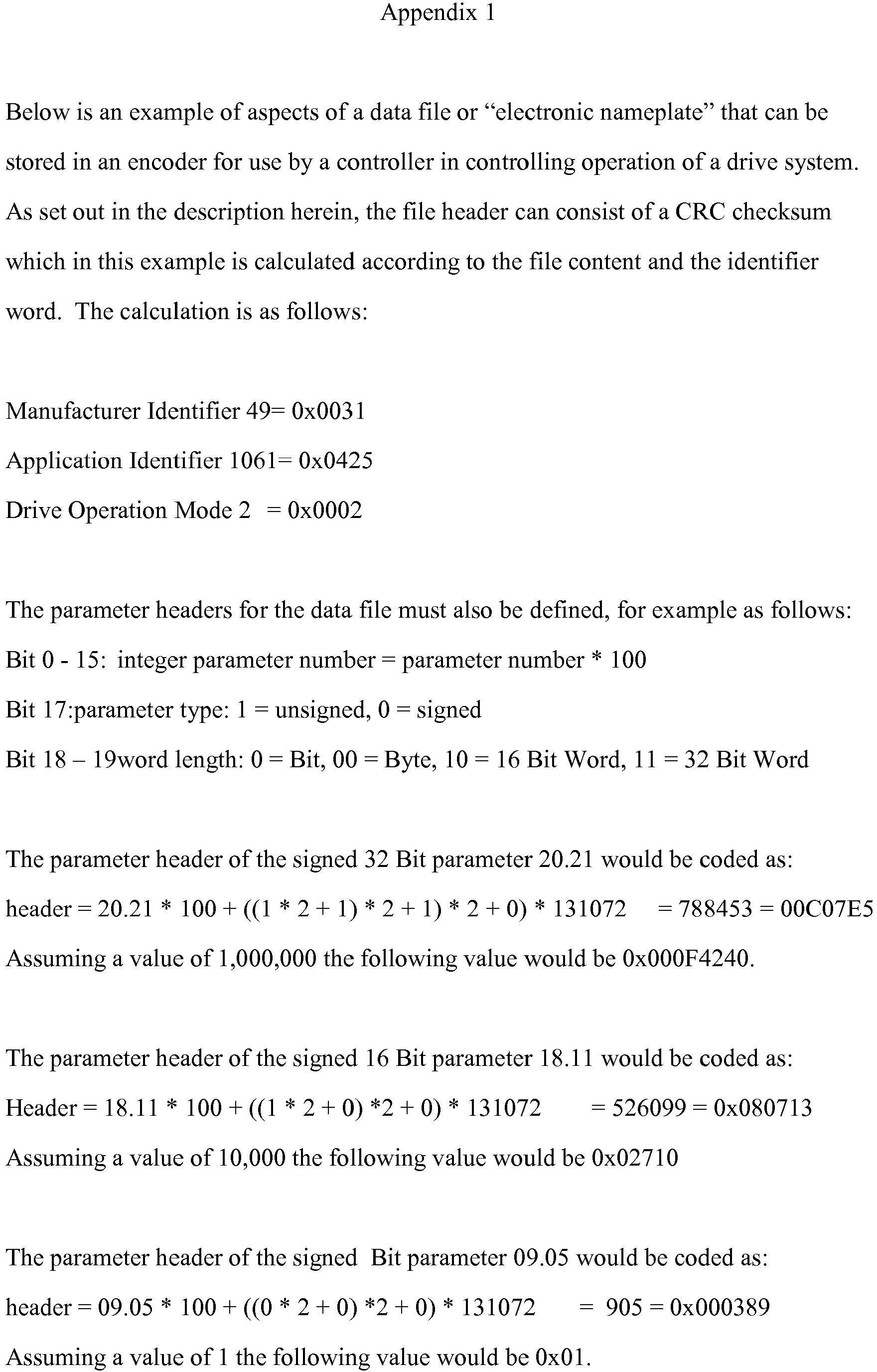

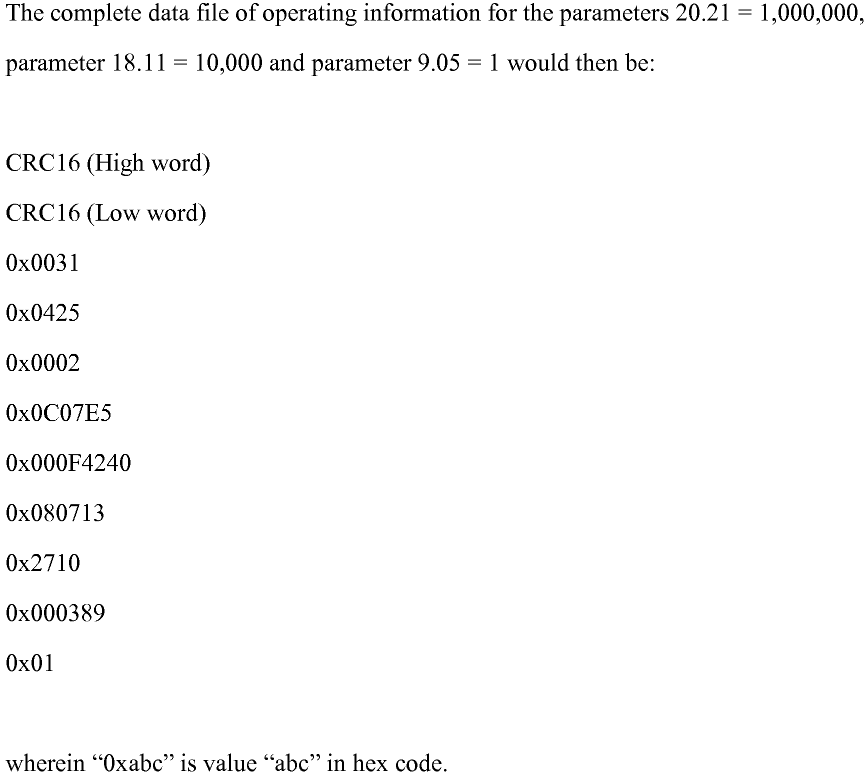

## Claims

1. An operating system for a mechanical load comprising a load controller, an electrical drive and a load drive mechanism for coupling to the drive to provide power to drive the load, the electrical drive comprising storage means storing data that comprises a profile of the operating system and the load for operation of the load, the data being downloadable to the load controller to enable the controller to run the operating system.

2. A system as claimed in claim 1 wherein said electrical drive comprises an electric machine, for example a rotary motor.

3. A system as claimed in claim 1 or claim 2 wherein the storage means is comprised within an encoder of the electrical drive.

4. A system as claimed in any preceding claim wherein the stored data comprises all the information required by the controller for running the operating system to drive the load.

5. A system as claimed in any preceding claim wherein the stored data comprises any of: set-up data, motor rated speed, motor rated current, motor nominal power, load size, target load speed, gear ratio, sheave mounting angle, encoder commutation offset or speed loop gain.

6. A system as claimed in any preceding claim wherein the storage means are arranged and operable to store the data as a data file comprising a file header and at least one parameter object, wherein said file header includes an identifier to enable the controller to identify a parameter object from the file header.

7. A system as claimed in claim 6 wherein a parameter object within the data file comprises a parameter header and a parameter value, wherein the parameter header defines a function of the parameter.

8. A system as claimed in any of claims 1-7 in which the load is an elevator.

9. A method of setting up an operating system for a mechanical load comprising a load controller, an electrical drive and a drive mechanism for coupling the drive to provide power to drive the load, in which the electrical drive comprises storage means, the method comprising:
assembling the electrical drive;
loading the storage means with data profiling the operating system;
assembling the drive and downloading the data from the storage means to the load controller to enable the controller to operate the load.

10. A method as claimed in claim 9 in which the load controller initiates the downloading of the data.

11. A method as claimed in claim 9 or claim 10 further comprising the step of, when an operating parameter for the drive or any other component of the drive system is changed, receiving and storing updated operating information at the storage means and communicating said updated operating information to the controller.

12. A method as claimed in claim 11 further comprising the step, performed by the controller, of receiving the updated operating information and amending control of the drive system using the received updated information.

13. A method as claimed in any of claims 9-12 in which the load is an elevator.

14. A computer or computer processor means programmed and operable to perform the method according to any of claims 9 to 13.

15. An encoder comprising a processor programmed and operable to perform the method according to claim 9 or claim 12.
